Europäisches Patentamt

European Patent Office

Office européen des brevets

(19)

(11) Veröffentlichungsnummer : **0 057 811**
**B1**

## (12) EUROPÄISCHE PATENTSCHRIFT

(45) Veröffentlichungstag der Patentschrift :
13.06.84

(21) Anmeldenummer : 82100078.3

(22) Anmeldetag : 08.01.82

(51) Int. Cl.³ : **B 60 J   3/02**

(54) **Drehlager für den Sonnenblendenkörper von Fahrzeug-Sonnenblenden.**

(30) Priorität : 04.02.81 DE 3103738

(43) Veröffentlichungstag der Anmeldung :
18.08.82 Patentblatt 82/33

(45) Bekanntmachung des Hinweises auf die Patenterteilung : 13.06.84 Patentblatt 84/24

(84) Benannte Vertragsstaaten :
DE FR GB IT SE

(56) Entgegenhaltungen :
EP-A- 0 044 452
DE-A- 3 021 984
DE-B- 2 551 633
FR-A- 2 431 931
FR-A- 2 450 709
FR-A- 2 458 415
GB-A- 1 354 485
US-A- 2 304 223

(73) Patentinhaber : **Gebr. Happich GmbH**
**Postfach 10 02 49 Clausenbrücke 1**
**D-5600 Wuppertal 1 (DE)**

(72) Erfinder : **Viertel, Lothar**
**V. Gartenreihe 48**
**D-6630 Saarlouis (DE)**
Erfinder : **Wrintmore, Alan**
**20, Rue des Aigrettes**
**F-57150 Creutzwald (FR)**

## Beschreibung

Die Erfindung bezieht sich auf ein Drehlager der im Oberbegriff des Anspruchs 1 angegebenen Art.

In den Unterlagen der DE-B 25 51 633 ist ein Drehlager für einen Sonnenblendenkörper beschrieben, das aus einem Lagerkörper, einer Lagerachse und einer diese beaufschlagende U-förmige Blattfeder besteht. Die freien Enden der Feder weisen dabei eine Verhakungsausbildung auf, die aus Verlängerungen der Schenkel aufgebaut ist, wobei eine Verlängerung ein durch eine zweimalige Abwinklung gebildeter Haken und die andere Verlängerung eine quer zur Schenkelrichtung verlaufende V-förmige, mit der Umkehrung zum gegenüberliegenden Schenkel gerichtete Feder ist, deren freies Ende in der Gebrauchsstellung den Haken des anderen Schenkels hintergreift. Durch die Verhakungsausbildung wird in einfacher Weise ein Auseinanderspreizen der freien Schenkelenden der U-förmigen Blattfeder vermieden. Der Abstand der Schenkel der Blattfeder vermieden. Der Abstand der Schenkel der Blattfeder muß jedoch größer gehalten werden als es die Dicke des Gehäuses verlangt, da andernfalls die Haken der Verhakungsausbildung nicht miteinander in Eingriff gebracht werden können. Damit sitzt die Blattfeder relativ locker am Lagergehäuse, was insbesondere in Verbindung mit Toleranzfehlern zu Knarr- oder Knackgeräuschen beim Verschwenken des Sonnenblendenkörpers führen kann.

Ausgehend von einem Drehlager der im Oberbegriff des Anspruchs 1 angegebenen und als bekannt vorausgesetzten Art, liegt der Erfindung nun die Aufgabe zugrunde, das Drehlager hinsichtlich des Qualitätsniveaus zu verbessern und die Einzelelemente so zu gestalten, daß sie einfach und kostengünstig herzustellen und zu montieren sind. Insbesondere soll ein absolut fester Sitz der Rastfeder gewährleistet sein.

Die Lösung dieser Aufgabe ist im kennzeichnenden Teil des Anspruchs 1 angegeben.

Die besonderen Vorteile des erfindungsgemäßen Drehlagers sind in der relativ einfachen Herstellbarkeit und in der so aufeinander abgestimmten Ausbildung der Einzelteile zu sehen, die eine problemlose Montage ermöglicht. Insbesondere ist nunmehr die Rastfeder, die ohne scharfe Abwinklungen od. dgl. ausgebildet ist, derart zuverlässig festgelegt und positioniert, daß beim Verschwenken des Sonnenblendenkörpers keine Knarr- od. dgl. Geräusche entstehen können.

Die Maßnahme nach Anspruch 2 ermöglicht es, die Rastfeder durch einfaches Aufklipsen am Lagergehäuse festzulegen. Durch die Maßnahme nach Anspruch 3 können die beiden Schenkel der Rastfeder bereichsweise deckungsgleich miteinander verlaufen und treten dadurch nicht aus der Ebene des Lagergehäuses hervor.

Die im Anspruch 4 gekennzeichnete Ausgestaltung der Erfindung ermöglicht eine besonders kostengünstige Ausbildung des Lagergehäuses mit einer kompletten Einlage für den Sonnenblendenkörper. Durch die maßnahme nach Anspruch 5 wird die nach Anspruch 4 noch optimiert.

Die besonders vorteilhafte Ausgestaltung der Erfindung nach Anspruch 6 macht sich die bei verschiedenen Sonnenblenden ohnehin vorhandene Drahteinlage zunutze, um die Rastfeder zu spannen und am Lagergehäuse festzulegen.

Anspruch 7 bietet den Vorteil, das Lagergehäuse aus relativ dünnem Blech zu bilden und dennoch eine ausreichende Festigkeit sicherzustellen.

Die Maßnahme nach Anspruch 8 schließlich stellt sicher, daß das Drehlagergehäuse keine scharfen Kanten aufweist und daher keine Verletzungsgefahr begründen kann.

Im folgenden wird die Erfindung anhand von Ausführungsbeispielen, die in den anliegenden Zeichnungen dargestellt sind, näher erläutert. Es zeigen

Figur 1 einen im Drehlagerbereich aufgeschnitten dargestellten Sonnenblendenkörper,

Figur 2 ein erstes Ausführungsbeispiel des Lagergehäuses in einem gegenüber Fig. 1 vergrößerten Maßstab,

Figur 3 die zum Drehlager gehörende Rastfeder,

Figur 4 die Montagestellung der Rastfeder,

Figur 5 den Vertikalschnitt, etwa folgend der Linie V-V nach Fig. 1, durch ein komplett montiertes Drehlager in stark vergrößertem Maßstab,

Figur 6 ein zweites Ausführungsbeispiel des Lagergehäuses und

Figur 7 einen Schnitt VII-VII nach Fig. 6.

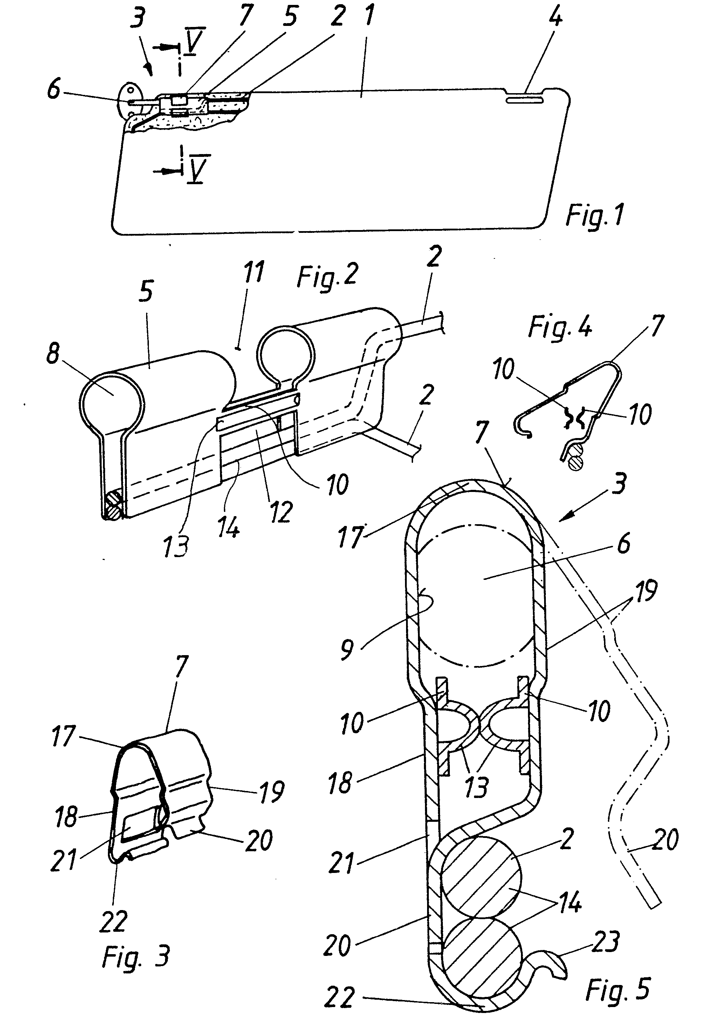

Fig. 1 ziegt einen Sonnenblendenkörper 1, der aus einem Polstereigenschaften aufweisenden Material besteht und durch eine eingelagerte, zu einem Rahmen geformte Drahteinlage 2 ausgesteift ist. Zur schwenkbeweglichen Anordnung des Sonnenblendenkörpers 1 in einem Fahrzeug ist ein Drehlager 3 und eine mit einem nicht gezeigten Lagerböckchen zusammenwirkende Gegenlagerachse 4 vorgesehen.

Das Drehlager 3 besteht im einzelnen aus einem Lagergehäuse 5 einer Lagerachse 6 und einer diese radial kontraktierenden Rastfeder 7.

Das Lagergehäuse 5, gemäß der Fig. 1, 2 und 4, 5, ist aus einem Blechzuschnitt gebildet, der durch mittiges Umbiegen gedoppelt ist und eine etwa pilzförmige Endgestaltung aufweist. Dabei ist eine Lagerbohrung 8 zur Aufnahme der zumindest eine Abflachung 9 aufweisenden Lagerachse 6 ausgebildet. Die Lagerbohrung 8 ist im mittigen Bereich durch eine sie querende Gehäuseausnehmung unterbrochen, die zur Aufnahme der die Lagerachse 6 beaufschlagenden Rastfeder 7 dient. Im Abstand von der Lagerachse 6 ist parallel zu dieser verlaufend das Lagergehäuse 5 mit einem Steg 10 ausgebildet, der durch die Doppelung des Ausgangsmaterials in zwei deckungsgleich hintereinanderliegende, mit Versteifungssicken 13 versehene Einzelstege 10 aufgeteilt ist. Durch den Steg 10 bzw. durch die Einzelstege 10 ist die Gehäuseausnehmung in eine obere Ausnehmung 11 und in eine untere Ausnehmung 12 unterteilt. Während die obere Ausnehmung 11 randoffen ausgebildet ist, ist die untere Ausnehmung 12 nach unten durch einen Endanschlag 14 begrenzt. Bei der Ausführungsform nach den Fig. 1, 2 und 4, 5 ist der Endanschlag 14 durch Bereich der Drahteinlage 2, die fest mit dem Lagergehäuse 5 z. B. durch Schweißen verbunden ist, gebildet.

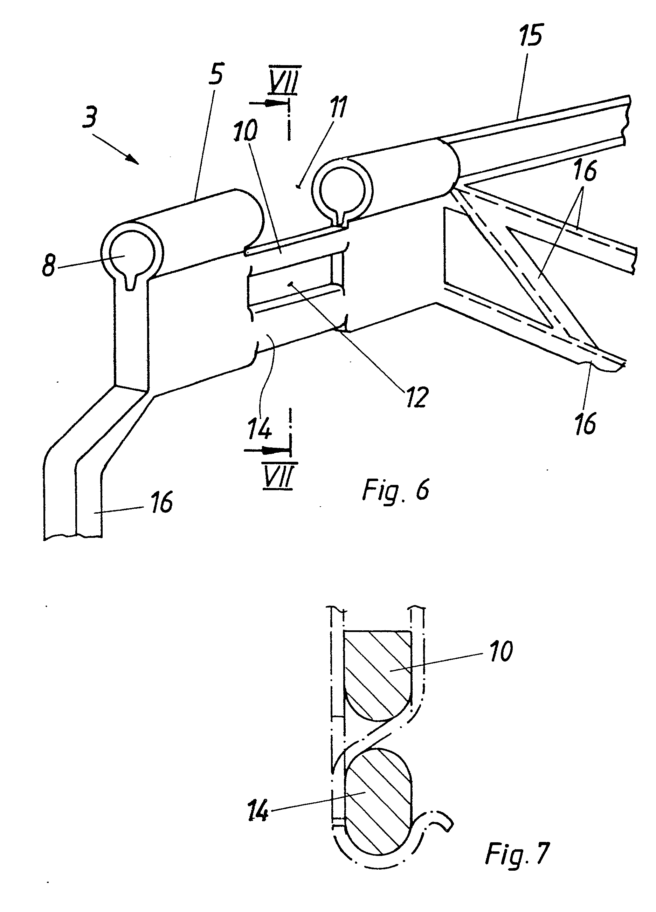

Nach Fig. 6 und 7 besteht das Lagergehäuse 5 aus einem einstückigen Kunststoffspritzgußkörper mit einer Lagerbohrung 8, einem die Gehäuseausnehmung in eine obere Ausnehmung 11 und eine untere Ausnehmung 12 unterteilenden Steg 10 und mit einem Endanschlag 14, der die untere Gehäuseöffnung 12 begrenzt. Zweckmäßigerweise ist das Lagergehäuse 5 ferner einstückig mit einem eine Versteifungseinlage für den Sonnenblendenkörper 1 bildenden Gitterrahmen 15 ausgebildet, dessen Streben mit 16 bezeichnet sind.

Fig. 3 zeigt die Rastfeder 7 im Anlieferungszustand. Die Rastfeder 7 besitzt eine etwa U-förmige Ausbildung mit zwei über einen dem Radius der Lagerachse 6 entsprechend gerundeten Steg 17 miteinander verbundene Schenkel 18, 19. Der Schenkel 19 besitzt einen etagenbogenförmig verkröpften Bereich, der so ausgebildet ist, daß sich für den Schenkel 19 in der Gebrauchslage der Rastfeder 7 einmal eine Abstützung auf dem Endanschlag 14 und für seinen freien Endbereich 20 eine Abstützung an der Seite des Endanschlages 14 ergibt, an der auch der andere Schenkel 18 der Rastfeder 7 zur Anlage kommt. Der freie, schmaler gehaltene Endbereich 20 wird in der Gebrauchslage der Rastfeder 7 von einer fensterartigen Ausnehmung 21, die in dem Schenkel 18 vorgesehen ist, aufgenommen. Der Schenkel 18 der Rastfeder 7 weist an seinem freien Endbereich eine offene Federöse 22 auf, die über die untere Seite des Endanschlages 14 klipsbar ist. Um das Aufklipsen zu erleichtern, weist die Federöse 22 endseitig eine nach außen und entgegengesetzt zur Krümmung der Federöse 22 abgerundete Zunge 23 auf und die Unterseite des Endanschlages 14 ist ebenfalls abgerundet, vorzugsweise mit einem der Federöse 22 entsprechenden Radius.

Bei der Montage des Rastfeder 7 wird diese, wie in Fig. 4 gezeigt, in schräger Lage an das Lagergehäuse 5 herangeführt und der freie Endbereich 20 des Schenkels 19 mit dem verkröpften Bereich in die untere Ausnehmung 12 des Lagergehäuses 5 gesteckt. Wenn der Verkröpfte Bereich auf dem Endanschlag 14 aufliegt, wird die Rastfeder 7 in eine senkrechte Lage verschwenkt, bis die Innenseite des Schenkels 19 an dem Steg 10 anliegt. Hiernach wird, ggf. unter Zuhilfenahme eines Preßstempels od. dgl., die Klipsverbindung zwischen der Federöse 22, die sich beim Klipsvorgang elastisch aufweitet, und dem Endanschlag 14 hergestellt.

**Ansprüche**

1. Drehlager für Sonnenblendenkörper (1) von Fahrzeugsonnenblenden, bestehend aus einem Lagergehäuse (5) mit einer Lagerachse (6) und mit einer Gehäuseausnehmung für eine die Lagerachse (6) radial spannende Rastfeder (7), die zwei über einen Steg (17) miteinander verbundene Schenkel (18, 19) und eine etwa U-förmig Ausbildung aufweist, dadurch gekennzeichnet, daß die Gehäuseausnehmung durch einen parallel zur Lagerachse (6) verlaufenden Steg (10) in eine obere randoffene Ausnehmung (11) und in eine untere, durch einen parallel zum Steg (10) verlaufenden Endanschlag (14) begrenzte Ausnehmung (12) unterteilt ist, daß die Rastfeder (7) in der Gebrauchsstellung mit den Innenseiten der Schenkel (18, 19) an den Außenseiten des Steges (10) anliegt und daß ein Schenkel (19) der Rastfeder (7) mit einem etwa etagenbogenförmig verkröpften Bereich die untere Ausnehmung (12) durchgreift, dabei auf dem Endanschlag (14) aufliegt und mit dem freien Endbereich (20) an der Seite des Endanschlages (14) abgestützt ist, an der auch der andere Schenkel (18) anliegt, welcher den Endanschlag (14) mit seinem freien Endbereich hintergreift.

2. Drehlager nach Anspruch 1, dadurch gekennzeichnet, daß der freie Endbereich des den Endanschlag (14) hintergreifenden Schenkels (18) der Rastfeder (7) als offene Federöse (22) ausgebildet ist.

3. Drehlager nach Anspruch 1 oder 2, dadurch gekennzeichnet, daß der mit seinem freien Endbereich den Endanschlag (14) hintergreifende Schenkel (18) der Rastfeder (7) eine fensterartige Ausnehmung (21) aufweist, die den entsprechend schmaler ausgebildeten freien Endbereich (20) des anderen Schenkels (19) aufnimmt.

4. Drehlager nach einem oder mehreren der Ansprüche 1 bis 3, dadurch gekennzeichnet, daß das Lagergehäuse (5) einstückig und materialeinheitlich mit dem Steg (10), mit dem Endanschlag (14) und mit einem den Sonnenblendenkörper (1) aussteifenden Gitterrahmen (15) ausgebildet ist.

5. Drehlager nach Anspruch 4, dadurch gekennzeichnet, daß das Lagergehäuse (5) mit Steg (10), Endanschlag (14) und Gitterrahmen (15) als Kunststoff-Spritzgußteil ausgebildet ist.

6. Drehlager nach einem oder mehreren der Ansprüche 1 bis 3, dadurch gekennzeichnet, daß das Lagergehäuse (5) aus einem Blechstanzteil besteht und stirnseitig gesehen eine pilzförmige Gestaltung aufweist, wobei der Steg (10) in zwei deckungsgleich hintereinanderliegende Einzelstege (10) unterteilt ist und wobei der Endanschlag (14) aus zumindest einem Bereich einer den Sonnenblendenkörper (1) aussteifenden Drahteinlage (2) besteht, die fest mit dem Lagergehäuse (5) verbunden ist.

7. Drehlager nach Anspruch 6, dadurch gekennzeichnet, daß die Einzelstege (10) mit Versteifungssicken (13) ausgebildet sind.

8. Drehlager nach einem oder mehreren der Ansprüche 1 bis 3 und 6, 7, dadurch gekennzeichnet, daß das Lagergehäuse (5) im wesentlichen als in sich geschlossener Hohlkörper mit äußeren Abrundungsradien von mindestens 3,2 mm ausgebildet ist.

**Claims**

1. A pivotal mounting for the visor body (1) of a vehicle sun visor, the mounting comprising a bush (5) and a shaft (6), in which the bush is provided with a cut-out for a stop spring (7) serving to radially clamp the shaft (6), the stop spring being substantially U-shaped and having two legs (18, 19) joined to each other by a crosspiece (17), characterized in that the cut-out of the bush is partitioned by a web (10) extending parallel with the shaft (6) into an upper circumferentially open cut-out section (11) and a lower cut-out section (12) bounded by a stop (14) extending parallel with the web (10), that, when the stop spring (7) has been arranged in its operative position, the inner surfaces of its legs (18, 19) abut on the outer surfaces of the web (10), that one leg (19) of the stop spring (7) includes a cranked portion similar to a curved step which passes through the lower cut-out section (12) and rests on the stop (14), that the free end portion (20) of said one leg is held on the stop's (14) side face against which the other leg (18) also abuts, and in that the free end portion of the other leg grips the stop (14).

2. A pivotal mounting according to claim 1, characterized in that the free end portion of the stop spring's (7) other leg (18) gripping the stop (14) is an open resilient loop (22).

3. A pivotal mounting according to claim 1 or claim 2, characterized in that the stop spring's (7) other leg (18) the free end portion of which grips the stop (14) is provided with a window-like aperture (21) accommodating the dimensionally suitably reduced free end portion (20) of said one leg (19).

4. A pivotal mounting according to any one or more of the claims 1 to 3, characterized in that the bush (5), the web (10), the stop (14) and a lattice frame (15), which reinforces the visor body (1), are constructed as a one-piece component of one and the same material.

5. A pivotal mounting according to claim 4, characterized in that the component combining the bush (5), the web (10), the stop (14) and the lattice frame (15) is a plastics injection-moulded one.

6. A pivotal mounting according to any one or more of the claims 1 to 3, characterized in that the bush (5) is a sheet-metal stamping of — in an end view thereof — mushroom shape, that the web (10) is split into two separate congruous tandem webs (10), and in that the stop (14) is formed by at least a section of a wire insert which reinforces the visor body (1) and which is securely joined to the bush (5).

7. A pivotal mounting according to claim 6, characterized in that the separate webs (10) are each reinforced by a respective fin (13).

8. A pivotal mounting according to any one or more of the claims 1 to 3 and 6 and 7, characterized in that the bush (5) is a substantially self-contained hollow body externally round off at radii of at least 3.2 mm.

**Revendications**

1. Palier pour corps de pare-soleil (1) de véhicule, constitué par un logement (5) comprenant un axe de palier (6) et un évidement de logement destiné à un ressort de blocage (7) serrant radialement l'axe (6) du palier, ledit ressort comprenant deux branches (18, 19) reliées l'une à l'autre par une partie (17) et présentant une forme sensiblement en U, caractérisé en ce que l'évidement du logement est subdivisé par une barrette (10) parallèle à l'axe (6) du palier en un évidement supérieur (11) ouvert vers le bord et en un évidement inférieur (12) limité par une butée d'extrémité (14) parallèle à la barrette (10), en ce que le ressort de blocage (7) s'applique en position d'utilisation par les côtés intérieurs de ses branches (18, 19) contre les côtés extérieurs de la barrette (10) et en ce qu'une branche (19) du ressort de blocage (7) traverse l'évidement inférieur (12) par une partie courbée formant un gradin, s'appliquant de ce fait sur la butée d'extrémité (14) et étant supportée par la partie d'extrémité libre (20) sur le côté de la butée d'extrémité (14) sur laquelle s'applique également l'autre branche (18) qui coopère par l'arrière et par sa partie d'extrémité libre avec la butée d'extrémité (14).

2. Palier selon la revendication 1, caractérisé en ce que la partie d'extrémité libre de la branche (18) du ressort de blocage (7) qui coopère par l'arrière avec la butée d'extrémité (14) est constituée sous forme d'une boucle élastique (22).

3. Palier selon la revendication 1 ou 2, caractérisé en ce que la branche (18) du ressort de blocage (7) qui coopère par l'arrière par sa partie d'extrémité libre avec la butée d'extrémité (14) comprend un évidement en forme de lumière (21) qui reçoit la partie d'extrémité libre (20) de l'autre branche (19) qui est plus étroite en proportion.

4. Palier selon l'une ou plusieurs des revendications 1 à 3, caractérisé en ce que le logement (5) du palier est constitué en une seule pièce et en un seul matériau avec la barrette 10, la butée d'extrémité (14) et un cadre en treillis (15) rendant le corps (1) du pare-soleil rigide.

5. Palier selon la revendication 4, caractérisé en ce que le logement (5) du palier est constitué avec la barrette (10), la butée d'extrémité (14) et le cadre en treillis (15) sous forme d'une pièce en matière synthétique moulée par injection.

6. Palier selon l'une ou plusieurs des revendications 1 à 3, caractérisé en ce que le logement (5) du palier est constitué par une section de tôle estampée et présente vu de front une forme en champignon, la barrette (10) étant subdivisée en deux barrettes individuelles (10) égales et situées l'une derrière l'autre et la butée d'extrémité (14) étant constituée par au moins une partie d'une garniture en fil métallique (2) rendant rigide le corps (1) du pare-soleil, garniture qui est fixée au logement (5) du palier.

7. Palier selon la revendication 6, caractérisé en ce que les barrettes individuelles (10) comprenant des nervures de renforcement (13).

8. Palier selon l'une ou plusieurs des revendications 1 à 3 et 6, 7, caractérisé en ce que le logement (5) du palier est constitué sensiblement sous forme d'un corps creux fermé dont les rayons des arrondis externes sont d'au moins 3,2 mm.

Fig. 1

Fig. 2

Fig. 4

Fig. 3

Fig. 5

Fig. 6

Fig. 7